# EUROPEAN PATENT APPLICATION

(11) **EP 1 777 828 A2**
(43) Date of publication of application: **25.04.2007**
(21) Application number: 06021872.4
(22) Date of filing: 18.10.2006
(51) Int. Cl.: H04B 1/06, H04H 1/00

(54) **User interface method for switching modes in combined terrestrial DMB terminal**

(30) Priority: 18.10.2005 KR 20050098176
(71) Applicant: Samsung Electronics Co., Ltd., Suwon-si, Gyeonggi-Do (KR)
(72) Inventor: Cho, Jeong-Sik, Yeongtong-gu Suwon-si Gyeonggi-do (KR); Kim, Young-Jip, Yeongtong-gu Suwon-si Gyeonggi-do (KR); Park, Joon-Ho, Yeongtong-gu Suwon-si Gyeonggi-do (KR); Kim, Hyun-Chul, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a user interface method for switching modes in a combined terrestrial DMB terminal. When an event according to other mode (B) occurs, a user's key input is confirmed. It is checked if the key input aims at mode switching, and if so, a current service mode is switched to the other mode (B). Otherwise, it is further checked if the key input is a key input for immediate execution. When the key input for immediate execution aims at immediate execution following audio termination, an audio service in the current service mode (A) is terminated, and then the current service mode is switched to the other mode (B). When the key input for immediate execution aims at immediate execution without the audio termination, a video service in the current service mode (A) is terminated, and then the current service mode is switched to the other mode (B).

## Description

The present invention relates to a method for switching modes in a combined terrestrial DMB (Digital Multimedia Broadcasting) terminal, and more particularly to a control method for preventing an audio output device and a video output device from conflicting with each other.

A combined terrestrial DMB terminal is capable of operating as both a mobile communication terminal and a terrestrial DMB terminal. In such a combined terrestrial DMB terminal, the terrestrial DMB terminal shares one audio output device and one video output device with the mobile communication terminal.

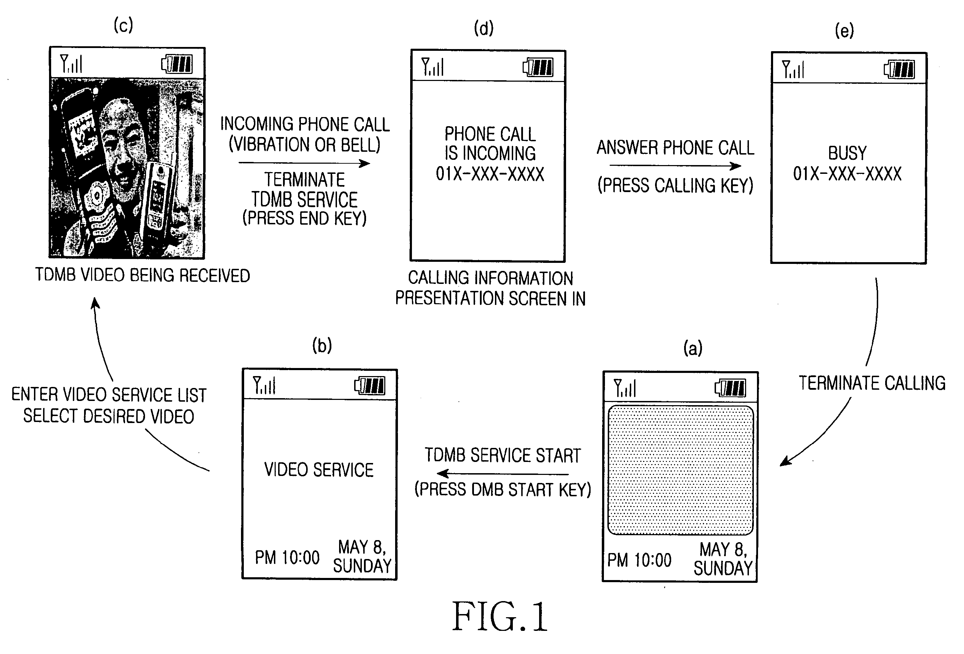

FIG. 1 illustrates an example of user interface operations in a conventional combined terrestrial DMB terminal.

Referring to FIGs. 1a and 1b, terrestrial DMB operations begins when a DMB start key on a normal standby screen, as illustrated in FIG 1a, is depressed. Once the terrestrial DMB begins, the screen enters a service list menu as illustrated in FIG 1b, and a user selects a desired video/audio/data service from the service list menu to receive the desired video/audio/data service, as illustrated in FIG 1c. If there is an incoming call while the video/audio/data service is received, the combined terrestrial DMB terminal presents the incoming call as an event, as illustrated in FIG 1d. In addition, if the user attempts a connection to the incoming call (that is, if the user presses a calling key), the DMB service ends and the call connection is established, as illustrated in FIG 1e.

If a phone call is incoming while a video/audio/data service is being received in a combined terrestrial DMB terminal, a user is informed of the incoming phone call through vibration or bell sound without calling information presentation. In order to check if the incoming phone call is an important call, the user must press an end key to completely terminate the terrestrial DMB service and go to a phone mode. The user cannot confirm information on the incoming call before performing such a procedure.

Subsequently, in order to answer the phone call, the user must press a calling key to speak with a caller. If the user wants to use the terrestrial DMB service again after the phone call is over, the user must again execute the terrestrial DMB software, view the service list menu, and then rerun the service which was in use before the phone call.

Thus, in using a user interface of a combined terrestrial DBM terminal employing the existing scheme, when a phone call is incoming during use of a DMB service, a user is no longer able to use the DMB service and must switch the terminal to the phone mode in order to perform phone service-related operations, e.g., confirm calling information presentation and answer the incoming phone call.

However, in this situation, there is a problem as the DMB service must be reentered and is inconvenient for the user.

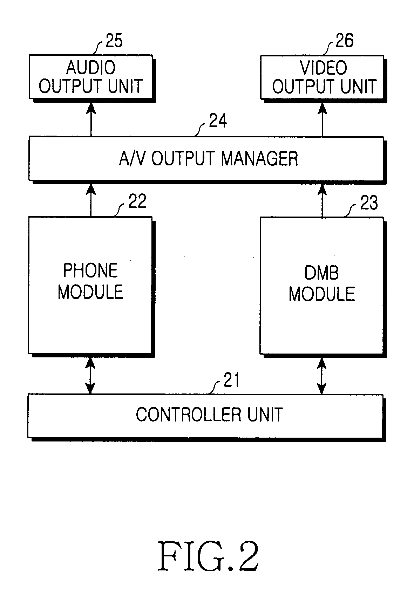

FIG. 2 schematically illustrates an architecture of a conventional combined terrestrial DMB terminal.

Referring to FIG. 2, a conventional combined terrestrial DMB terminal includes a controller unit 21 for controlling the overall functions of the terminal, a phone module 22 for performing phone mode operations, a DMB module 23 for performing operations for DMB broadcasting, an A/V output manager 24 connected to the phone module 22 and the DMB module 23 to control audio and video outputs, an audio output unit 25 for outputting audio information under the control of the A/V output manager 24, and a video output unit 26 for outputting video information under the control of the A/V output manager 24.

The combined terrestrial DMB terminal further has individual independent function blocks representing the software used in each mode.

In this way, although the phone module and the DMB module can independently perform their own operations in view of both the hardware and software architectures, the current user interface does not make the most of such a characteristic.

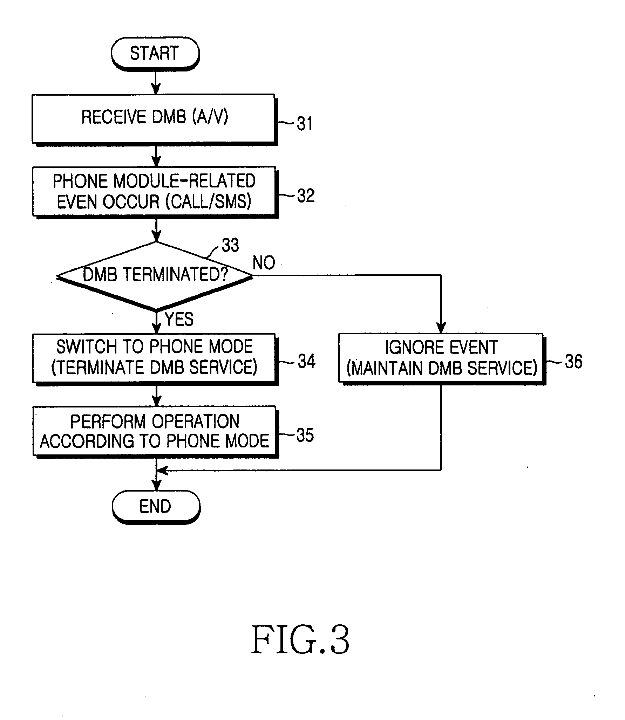

FIG. 3 is a flowchart illustrating an example of a conventional mode switching method in a combined terrestrial DMB terminal.

Referring to FIG. 3, in a conventional mode switching method in a combined terrestrial DMB terminal, when a phone module-related event (e.g., character SMS message or incoming call) occurs (step 32) while audio or video broadcasting is being received (step 31), whether operations according to a phone module are performed or operations according to a DMB module are performed is determined by whether the DMB broadcasting, which is being currently received, is terminated (step 33).

If the DMB broadcasting is not terminated (step 33), then the phone module-related event is ignored, and the DMB broadcasting is continually received (step 36).

In contrast, if the DMB broadcasting is terminated (step 33), then the terminal is switched to a phone mode to perform operations according to the phone mode. For example, in the phone mode, the character SMS message is confirmed or the incoming call is answered (step 35).

In this situation, the character SMS according to the phone mode requires only a video output, and the connection to an incoming call according to the phone mode requires only an audio output. However, for DMB broadcasting, a video service requires both audio and video outputs, and an audio service requires only an audio output.

Therefore, the DMB service and the phone mode may be used together according to the respective service combinations, but this is impossible by the conventional method.

For example, when a call connection event occurs while a user uses a terrestrial DMB video service, it is possible to allocate only the audio output unit to the phone mode so as to perform the call connection, and still allocate the video output unit to the DMB service. In this way, the audio output unit can support the user's call whereas the video output unit can be continually used for the terrestrial DMB video service. However, in the conventional mode switching method in a combined terrestrial DMB terminal, since all resources including audio and video resources are allocated to the phone mode, all the DMB services must be terminated.

In addition, when a SMS arrival event occurs while a user is using a terrestrial DMB video service, it is possible to allocate only the video output unit to the phone mode so as to perform SMS reception, and still allocate the audio output unit to the DMB service. In this way, the video output unit can support the user to confirm the SMS whereas the audio output unit can be continually used for the terrestrial DMB service. However, in the conventional mode switching method in a combined terrestrial DMB terminal, since all resources including audio and video resources are allocated to the phone mode, all the DMB services must be terminated.

Accordingly, the present invention has been made to solve at least the above-mentioned problem occurring in the prior art and provides additional advantages.

It is the object of the present invention to provide a mode switching method in a combined terrestrial DMB terminal, which enables operations according to different modes to be performed concurrently by allocating resources of the terminal's audio and video output units to the different modes, and facilitates switching between the respective modes which are being performed.

This object is solved by the subject matter of the independent claims.

Preferred embodiments are defined by the subject matter of the dependent claims.

In one embodiment, there is provided a user interface for switching modes in a combined terrestrial DMB terminal, the method including the steps of when an event according to another mode (B) occurs in a state where a current service mode (A) is activated in the combined terrestrial DMB terminal, confirming a user's key input; checking if the key input is a key input for mode switching, and if so, switching the current service mode to the other mode (B); checking if the key input is the key input for mode switching, and if not so, checking if the key input is a key input for immediate execution, when the key input is a key input for immediate execution following audio termination, terminating an audio service according to the current service mode (A), and then switching the current service mode to the other mode (B); and when the key input is a key input for immediate execution without the audio termination, terminating a video service according to the current service mode (A), and then switching the current service mode to the other mode (B).

The above features and advantages of the present invention will be more apparent from the following detailed description taken in conjunction with the accompanying drawings, in which:
FIG. 1 is a view illustrating an example of user interface operations in a conventional combined terrestrial DMB terminal;
FIG. 2 is a block diagram schematically illustrating a hardware function block architecture in a conventional combined terrestrial DMB terminal;
FIG. 3 is an operational flowchart illustrating an example of a conventional mode switching method in a combined terrestrial DMB terminal;
FIG. 4 is a block diagram illustrating an architecture of an output device manager which enables output devices to be allocated between modes in a combined terrestrial DMB terminal in accordance with a preferred embodiment of the present invention;
FIG. 5 is a view illustrating a display for indicating a current mode in a combined terrestrial DMB terminal in accordance with a preferred embodiment of the present invention;
FIG. 6 is an operational flowchart illustrating a user interface method for switching modes in a combined terrestrial DMB terminal in accordance with a preferred embodiment of the present invention;
FIG. 7 is a view illustrating performing a user interface method for switching modes in a combined terrestrial DMB terminal when an incoming phone call event occurs during the reception of a DMB video service in accordance with a preferred embodiment of the present invention;
FIG. 8 is a view illustrating performing a user interface method for switching modes in a combined terrestrial DMB terminal when an incoming phone call event occurs during the reception of a DMB audio service in accordance with a preferred embodiment of the present invention;
FIG. 9 is a view illustrating performing a user interface method for switching modes in a combined terrestrial DMB terminal when a character SMS message arrival event occurs during the reception of a DMB video service in accordance with a preferred embodiment of the present invention;
FIG. 10 is a view illustrating performing a user interface method for switching modes in a combined terrestrial DMB terminal when a character SMS message arrival event occurs during the reception of a DMB audio service in accordance with a preferred embodiment of the present invention; and
FIG. 11 is an operational flowchart illustrating a mode switching procedure according to phone mode termination in performing a user interface method for switching modes in a combined terrestrial DMB terminal in accordance with a preferred embodiment of the present invention.

Hereinafter, embodiments of the present invention will be described with reference to the accompanying drawings. It should be noted that the similar components are designated by similar reference numerals although they are illustrated in different drawings. For the purposes of clarity and simplicity, a detailed description of known functions and configurations incorporated herein will be omitted as it may obscure the subject matter of the present invention.

In embodiments of the present invention, a combined terrestrial DMB terminal is largely classified into a phone mode and a DMB mode. Also, the preferred embodiments of the present invention will be described on the assumption that a mode switching key for switchover between the two modes exists in the combined terrestrial DMB terminal. Such a mode switching key may be implemented by using an existing key or by creating a new key.

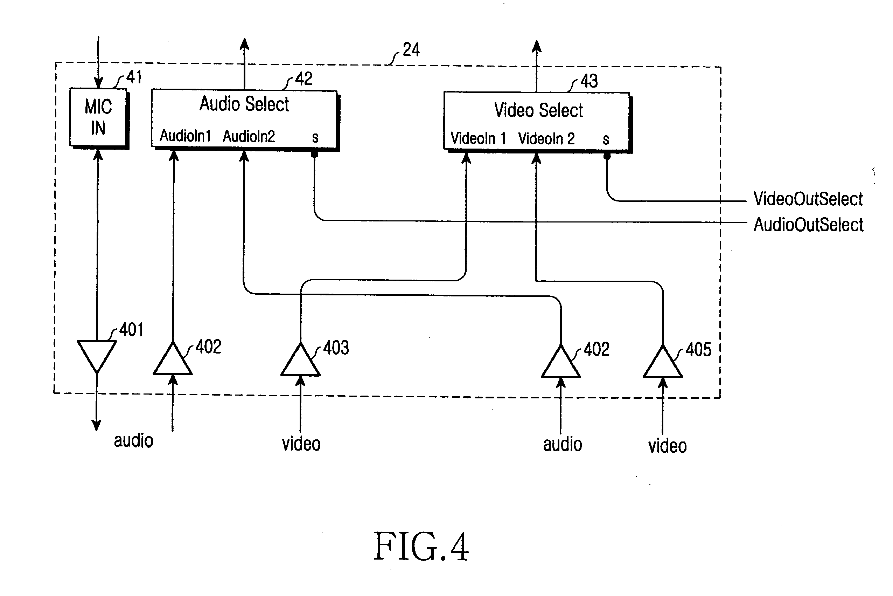

FIG. 4 illustrates an architecture of an output device manager which enables output devices to be allocated between modes in a combined terrestrial DMB terminal in accordance with a preferred embodiment of the present invention.

Referring to FIG. 4, an output device manager, according to an embodiment of the invention, that enables output devices to be allocated between modes in a combined terrestrial DMB terminal. The output device manager includes a MIC input unit 41 for inputting an external audio signal and processing the input audio signal, an audio selection unit 42 for selecting an audio signal output according to the phone mode or an audio signal output according to the DMB mode, a video selection unit 43 for selecting a video signal output according to the phone mode or a video signal output according to the DMB mode, and a plurality of audio/video input/output units 401 to 405.

In order to operate the audio selection unit 42 and the video selection unit 43, audio and video output selection signals are inputted to cause the selection units to perform corresponding selection operations, respectively. Table 1 shows the selection operations of the audio and video selection units 42, 43 according to such audio and video output selection signals.

**Table 1**

| Mode | video output selection | audio output selection | output | |
|---|---|---|---|---|
| 0 | 0 | 0 | video 1 | audio 1 |
| 1 | 0 | 1 | video 1 | audio 2 |
| 2 | 1 | 0 | video 2 | audio 1 |
| 3 | 1 | 1 | video 2 | audio 2 |

In Table 1, video 1 and audio 1 correspond to video and audio output according to the phone mode, and video 2 and audio 2 correspond to video and audio according to the DMB mode. Thus, the video and audio outputs may be all outputted according to the DMB mode or may be all outputted according to the phone mode. In addition to this, it is possible to output the video output according to the DMB mode and the audio output according to the phone mode or to output the video output according to the phone mode and the audio output according to the DMB mode.

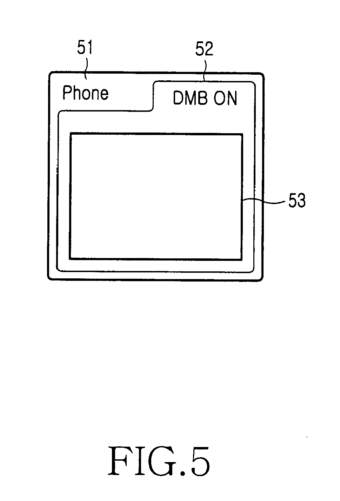

FIG. 5 illustrates a display for indicating a current mode in a combined terrestrial DMB terminal in accordance with a preferred embodiment of the present invention.

Referring to FIG. 5, a current mode and a switching target mode are indicated on a display screen in a combined terrestrial DMB terminal.

That is, a current mode, which is currently activated, is indicated through a phone mode menu 51 and a DMB mode menu 52 illustrated in FIG. 5. Thus, if key inputs are executed through a key input unit when the DMB mode is activated, the key inputs are processed as key inputs for performing operations in the DMB mode. In contrast with this, if key inputs are executed through the key input unit when the phone mode is activated, the key inputs are processed as key inputs for performing operations in the phone mode.

The display screen illustrated in FIG. 5 has a configuration in which menus are organized in a cascade format so that switching between the two modes (menus) is represented by changing one window to another window. Modes 51, 52 corresponding to the respective windows are indicated at the top of the windows.

In combined terrestrial DMB terminal according to the present invention, switching between modes and function execution may be processed in two separate schemes.

One scheme is a scheme in which a mode is switched to a desired mode through mode switching, and then a corresponding function is performed through a key input for triggering an operation according to the switched mode. The other is a scheme in which a corresponding function is performed in a current mode by inputting a shortcut key for triggering an operation according to other mode.

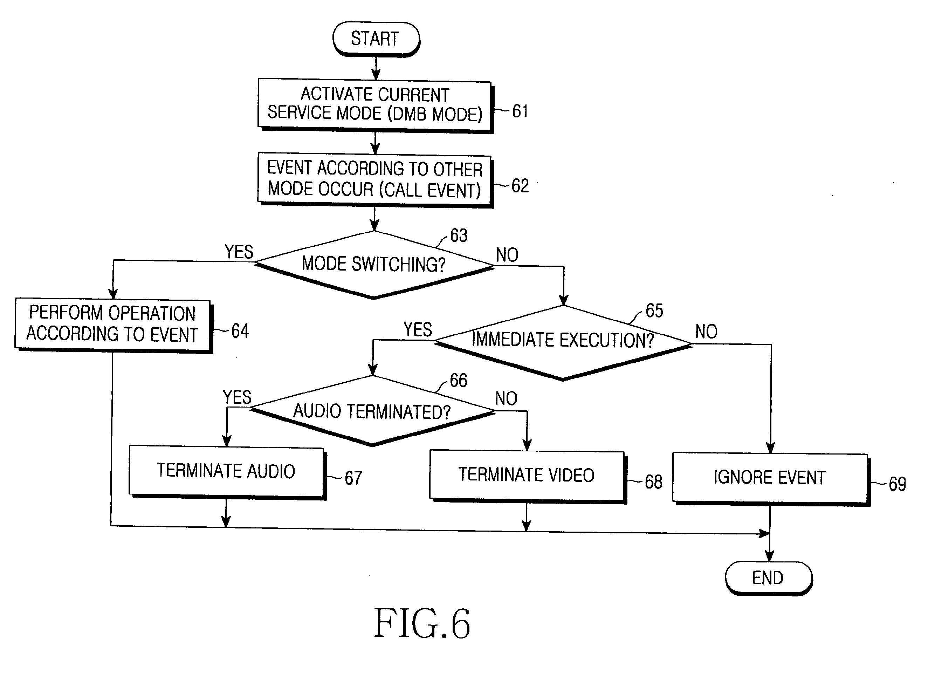

FIG. 6 is an operational flowchart illustrating a user interface method for switching modes in a combined terrestrial DMB terminal in accordance with a preferred embodiment of the present invention.

Referring to FIG. 6, a user interface method for switching modes in a combined terrestrial DMB terminal relates to a method for processing an event according to another mode in a state where the event occurs (step 61) when a current service mode is activated (step 61).

Looking into operational procedures according to such a method, when an event according to another mode (B) occurs (step 62) when a current service mode (A) is activated (step 61), whether a user executes a key input is checked first, and if so, whether the key input for mode switching is further checked (step 63). If the key input is for mode switching, the current service mode (A) is switched to the corresponding mode (B), and operations according to the occurred event are performed in the switched-to mode (step 64).

However, if the key input is not for mode switching (step 63), whether the key input is a key input for immediate execution is checked (step 65).

When the key input is for immediately executing an audio termination operation (step 66), audio according to the current service mode (A) is terminated, and audio according to the other mode (B) is activated (step 67). That is, in this case, video information according to the DMB mode is still outputted as video (assuming mode A is DMB mode). Such a key input corresponds to a case where an immediate execution key for a call connection according to the phone mode is inputted in the DMB mode. In the case of the call connection, since only a connection via audio is required, video information is maintained in the DMB mode, and mode switching is effected only for the audio connection.

Also, when the key input for immediate execution is not for immediately executing an audio termination operation (step 66), the video is terminated, and video according to the other mode (B) is activated (step 68). That is, in this case, audio information according to the DMB mode is still outputted as audio. Such a key input corresponds to a case where an immediate execution key for confirming a character SMS message according to the phone mode is inputted in the DMB mode. In the case of the character SMS message confirmation, as only a connection via video is required, audio information is maintained in the DMB mode, and mode switching is effected only for the video connection.

Further, when the key input is not for immediate execution, the occurred event is ignored, and the current service mode (A) is maintained (step 69).

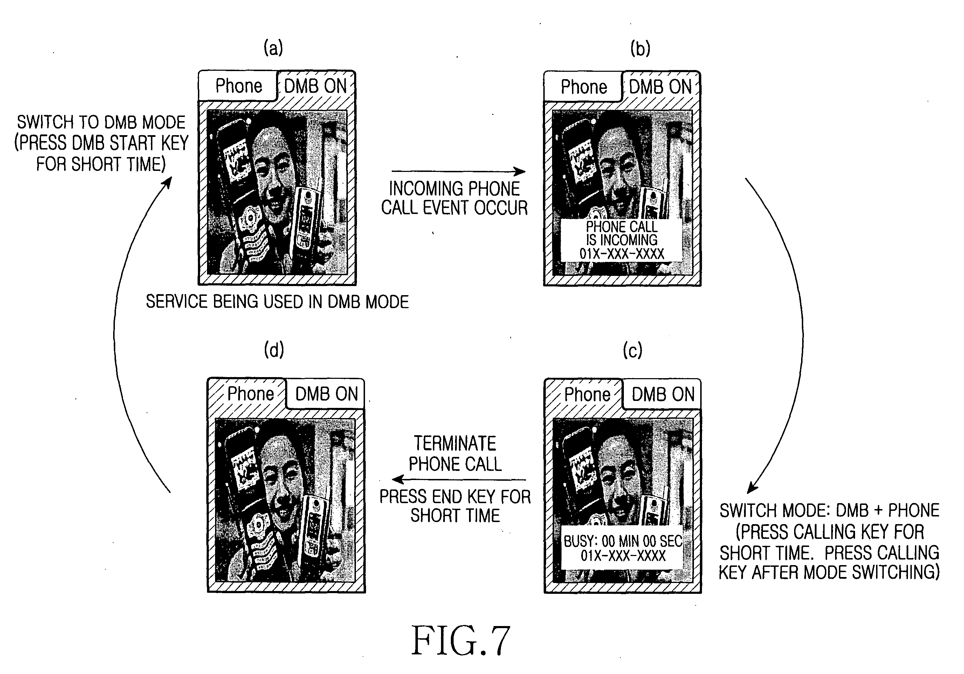

Hereinafter, the user interface method for switching modes in a combined terrestrial DMB terminal according to the present invention will be described in more detail with reference to FIGs. 7 to 10.

Here, examples of the key input to be applied to the method according to the present invention are shown below in Table 2.

**Table 2**

| mode | key event | operation |
|---|---|---|
| phone mode | long press ofDMB key | DMB start |
| | short press of DMB key | switching to DMB mode |
| | long press of end key | terminal power-off |
| | short press of end key | App termination |
| DMB mode | long press of calling key | switching to phone mode-audio (video in DMB mode) |
| | short press of calling key | switching to phone mode-video (audio in DMB mode) |
| | short press of DMB key | switching to phone mode |
| | end key | DMB termination |

Referring to Table 1, mode switching between the DMB mode and the phone mode is performed using a DMB key. Also, when an event according to phone mode occurs in the DMB mode, the following three types of mode switching are provided:

First, a long press of the DMB key switches a current mode to the phone mode. At this time, both video and audio outputs are managed in the phone mode.

Secondly, a short press of the calling key is recognized as a key input for immediate execution. In this case, a current mode is also switched to the phone mode. However, an audio output is still maintained in the DMB mode.

Thirdly, a long press of the calling key is recognized as a key input for immediate execution. In this case, a current mode is also switched to the phone mode. However, a video output is still maintained in the DMB mode.

FIG. 7 illustrates how to perform the user interface method for switching modes in a combined terrestrial DMB terminal when an incoming phone call event occurs during the reception of a DMB service in accordance with a preferred embodiment of the present invention.

Referring to FIGs. 7a-7d, if an incoming phone call event occurs (FIG. 7b) while a DMB service is being received in the DMB mode (FIG. 7a), information on the incoming phone call event is generated on the screen of the combined terrestrial DMB terminal.

In this case, the user interface method for mode switching according to the present invention can provide three operations, that is, immediate execution, post-mode switching execution, and event ignoring.

FIG. 7c illustrates mode switching through the immediate execution. Here, the immediate execution refers to immediate execution accompanied with the termination of a current audio operation, and it can be seen from FIG. 7c that video service of the DMB service is still displayed.

If the call is terminated in a state illustrated in FIG. 7c, it is checked if the DMB mode is activated. This is because there is no substantial operation although a current activated mode is the phone mode. Thus, when the DMB mode is activated (e.g., when DMB middleware is activated), the current phone mode is switched to the DMB mode as illustrated in FIG 7d.

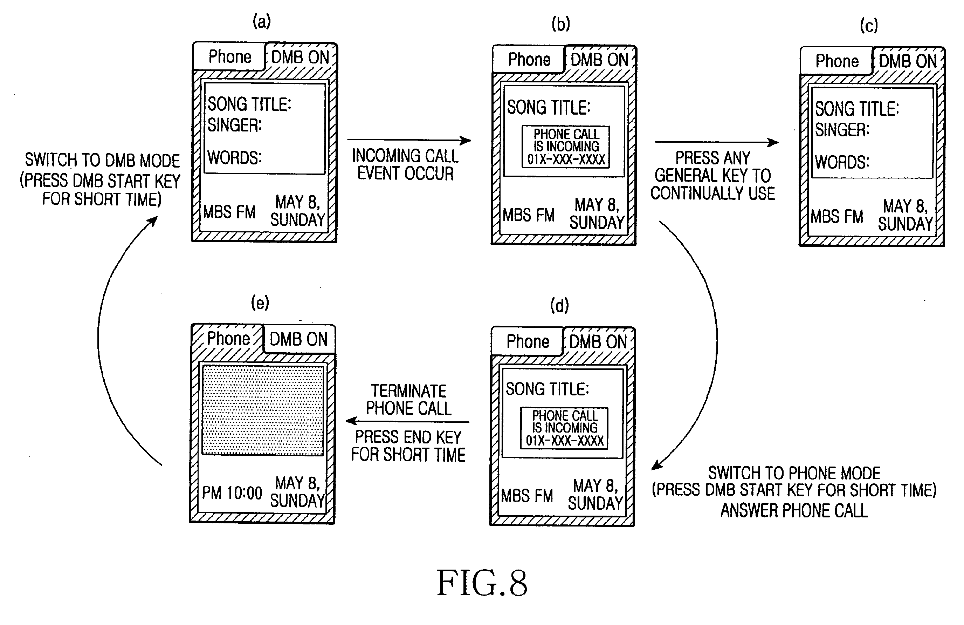

FIGs. 8a-8e illustrates performing the user interface method for switching modes in a combined terrestrial DMB terminal when an incoming phone call event occurs during the reception of a DMB service in accordance with a preferred embodiment of the present invention.

Referring to FIG. 8, if an incoming phone call event occurs (FIG. 8b) while a DMB service is received in the DMB mode (FIG. 8a), information on the incoming phone call event is generated on the screen of the combined terrestrial DMB terminal.

In this case, the user interface method for mode switching according to the present invention can provide three operations: immediate execution, post-mode switching execution, and event ignoring.

FIG. 8c illustrates a case where the event is ignored by inputting any general key.

FIG. 8d illustrates mode switching through the immediate execution. Here, the immediate execution refers to immediate execution without the termination of a current operation, and it can be seen from FIG. 8c that audio of the DMB service is still provided.

If the call is terminated in a state illustrated in FIG. 8c, it is checked if the DMB mode is activated. This is because there is no substantial operation although a current activated mode is the phone mode. Thus, when the DMB mode is activated (e.g., when DMB middleware is activated), the current phone mode is switched to the DMB mode as illustrated in FIG. 8e.

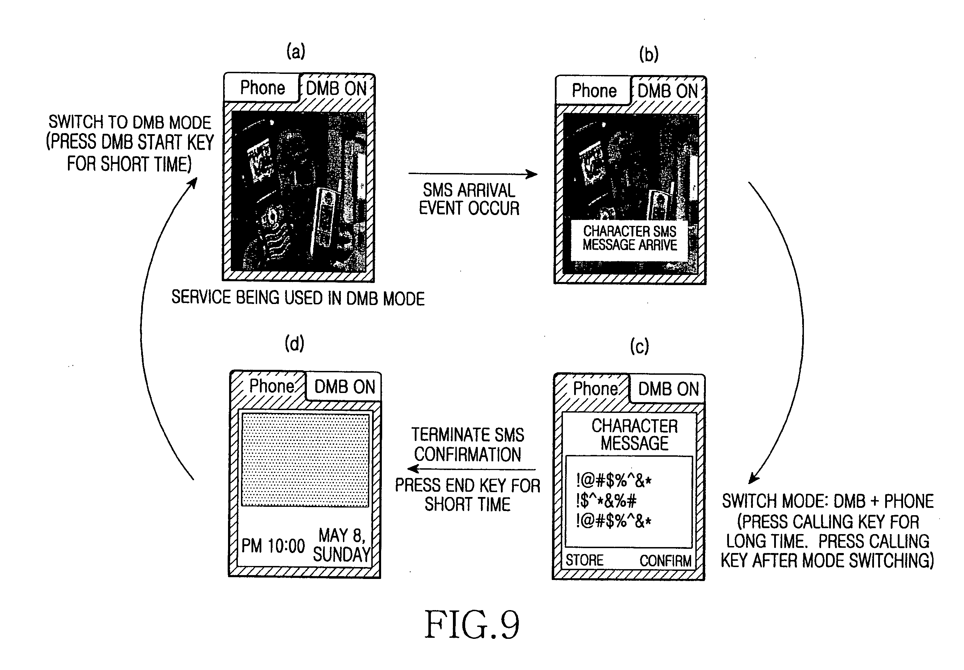

FIG. 9 illustrates how to perform the user interface method for switching modes in a combined terrestrial DMB terminal when a character SMS message arrival event occurs during the reception of a DMB video service in accordance with a preferred embodiment of the present invention.

Referring to FIGs. 9a-9d if a character SMS message arrival event occurs (FIG. 9b) while a DMB service is received in the DMB mode (FIG. 9a), information on the character SMS message arrival event is generated on the screen of the combined terrestrial DMB terminal.

In this case, the user interface method for mode switching according to the present invention can provide three operations; immediate execution, post-mode switching execution, and event ignoring.

FIG. 9c illustrates mode switching through the immediate execution. Here, the immediate execution refers to immediate execution without the termination of a current audio operation, and thus audio of the DMB service is still provided.

If the call is terminated in a state illustrated in FIG. 9c, it is checked if the DMB mode is activated. This is because there is no substantial operation although a current activated mode is the phone mode. Thus, when the DMB mode is activated (e.g., when DMB middleware is activated), the current phone mode is switched to the DMB mode as illustrated in FIG. 9d.

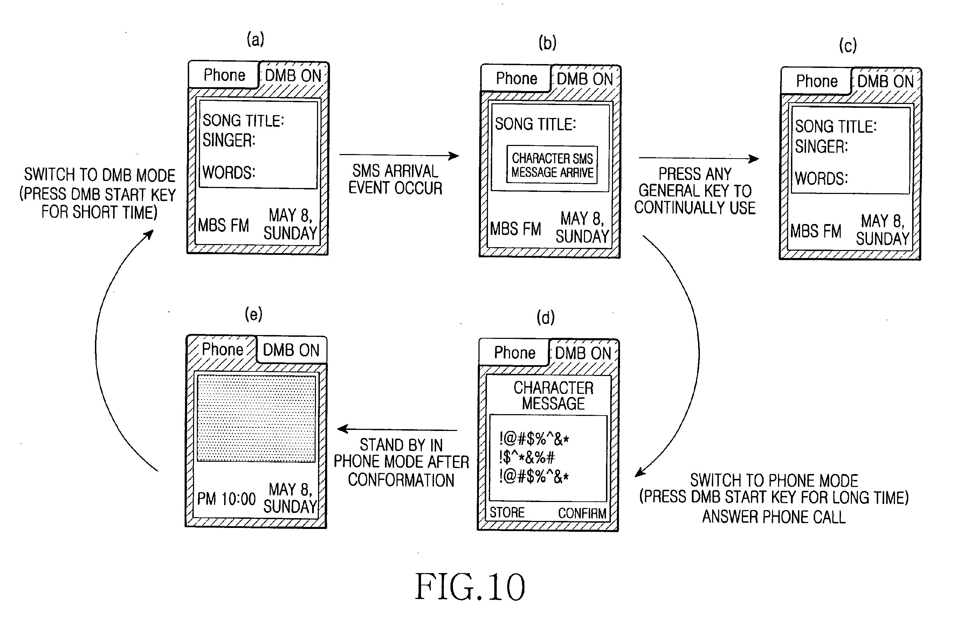

FIG. 10 illustrates performing the user interface method for switching modes in a combined terrestrial DMB terminal when a character SMS message arrival event occurs during the reception of a DMB service in accordance with a preferred embodiment of the present invention.

Referring to FIG. 10,.if a character SMS message arrival event occurs (FIG. 10b) while a DMB service is being received in the DMB mode (FIG. 10a), information on the character SMS message arrival event is generated on the screen of the combined terrestrial DMB terminal.

In this case, the user interface method for mode switching according to the present invention can provide three operations; immediate execution, post-mode switching execution, and event ignoring.

FIG. 10c illustrates a case where the event is ignored by inputting any general key.

FIG. 10c, also, illustrates mode switching through the immediate execution. Here, the immediate execution refers to immediate execution without the termination of a current operation, and thus the DMB audio service is still maintained.

If the call is terminated in a state illustrated in FIG. 10d, it is checked if the DMB mode is activated. This is because there is no substantial operation although a current activated mode is the phone mode. Thus, when the DMB mode is activated (e.g., when DMB middleware is activated), the current phone mode is switched to the DMB mode as illustrated in FIG. 10e.

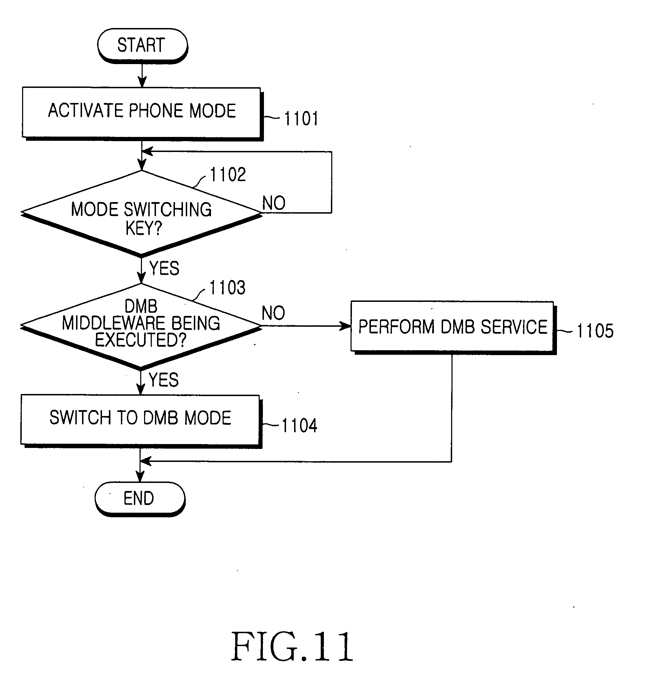

FIG. 11 is an operational flowchart illustrating a mode switching procedure according to phone mode termination in performing the user interface method for switching modes in a combined terrestrial DMB terminal in accordance with a preferred embodiment of the present invention.

Referring to FIG. 11, a mode switching procedure according to phone mode termination in performing the user interface method of the present invention begins with checking if the mode switching key is inputted (step 1102) when the phone mode is activated (step 1101).

If the mode switching key is not inputted, the process waits until the mode switching key is inputted. When the mode switching key is inputted, it is checked whether the DMB mode is in operation (step 1103). This is confirmed by checking whether DMB middleware is executed.

If a result of this checking (step 1103) shows that the DMB mode is in operation, the phone mode is immediately switched to the DMB mode (step 1104), and if the DMB mode is not in operation, a DMB service is run (step 1105).

The above-mentioned user interface method of the present invention may be implemented by a computer-readable program and stored in a recording medium (CD-ROM, RAM, floppy disk, hard disk, optical magnetic disk, etc.). Or may be downloaded over a network. The computer-readable program may be loaded into a memory of the terminal and a processor may access the memory to execute the program to execute the processing steps disclosed herein.

According to the present invention as described above, in a combined terrestrial DMB terminal, it is possible to easily use services according to the phone mode and process events according to the phone mode through mode switching while continually using a part of a terrestrial DMB service, thereby enabling a user to be provided with an opportunity of continually using the DMB service.

While the invention has been shown and described with reference to certain preferred embodiments thereof, it will be understood by those skilled in the art that various changes in form and details may be made therein without departing from the scope of the invention as defined by the appended claims.

## Claims

1. A user interface method for switching modes in a combined terrestrial digital multimedia broadcasting terminal, the method comprising the steps of:
(a) confirming a user's key input responsive to an event occurring in a non-active mode when a current service mode is activated;
(b) checking whether the key input is for mode switching, and if so, activating the non-active mode as the current service mode;
(c) checking whether the key input is for mode switching, and if not so, checking if the key input is a key input for immediate execution;
(d) when the key input for immediate execution is a key input for immediate execution following audio termination, terminating an audio service according to the current service mode, and partially activating the non-active mode; and
(e) when the key input for immediate execution is a key input for immediate execution without the audio termination, terminating a video service according to the current service mode, and partially activating the non-active mode.

2. The method as claimed in claim 1, wherein the partial activation of the non-active mode in step (d), maintains the video service according to the current service mode.

3. The method as claimed in claim 1 or 2, wherein the partial activation of the non-active mode in step (e), maintains the audio service according to the current service mode.

4. The method as claimed in claim 2, wherein after an operation according to the partially activated mode is completed, this mode is automatically switched to the current service mode.

5. The method as claimed in one of claims 1 to 4, wherein the key input for mode switching is implemented using a predetermined key.

6. The method as claimed in claim 1, wherein the event in step (d) is a call connection service.

7. The method as claimed in claim 1, wherein the event in step (e) is a character SMS confirmation service.

8. An user-interface apparatus for switching modes in a combined terrestrial digital multimedia broadcasting terminal, the apparatus comprising:
a processor in communication with a memory, the processor executing code for:
(a) confirming a key input responsive to an event occurring in a non-active mode when a current service mode is activate;
(b) checking whether the key input is for mode switching, and if so, activating the non-active mode as the current service mode;
(c) checking whether the key input is for mode switching, and if not so, checking if the key input is a key input for immediate execution;
(d) when the key input for immediate execution is a key input for immediate execution following audio termination, terminating an audio service according to the current service mode, and partially activating the non-active mode; and
(e) when the key input for immediate execution is a key input for immediate execution without the audio termination, terminating a video service according to the current service mode, and partially activating the non-active mode.

9. The apparatus as claimed in claim 8, wherein the partial activation of the non-active mode in step (d), maintains the video service according to the current service mode.

10. The apparatus as claimed in claim 8 or 9, wherein the partial activation of the non-active mode in step (e), maintains the audio service according to the current service mode.

11. A method for controlling operation of a phone/digital multimedia broadcasting dual-mode system, each mode composed of a first and second service, the method comprising the step of:
receiving an occurrence of an event associated with the first mode of the digital multimedia broadcasting system while the system is in the second mode;
receiving an input in response to the occurrence of an event; and
responsive to the received input, switching to at least one service of the first system.

12. The method as recited in claim 11, further comprising the step of:
terminating the corresponding at least one service of the second system.

13. The method as recited in claim 11 or 12, wherein the first service is an audio service and the second service is a video service.

14. The method as recited in one of claims 11 to 13, wherein the event is a call connection service.

15. The method as recited in one of claims 11 to 13, wherein the event is a character SMS confirmation message.

16. An apparatus for controlling operation of a phone/digital multimedia broadcasting dual-mode system, each mode composed of a first and second service, the apparatus comprising:
a processor in communication with a memory, the processor executing code for:
receiving an occurrence of an event associated with the first mode of the digital multimedia broadcasting system while the system is in the second mode;
receiving an input in response to the occurrence of an event; and
responsive to the received input, switching to at least one service of the first system.

17. The apparatus as recited in claim 16, the processor further executing the code for:
terminating the corresponding at least one service of the second system.

18. The apparatus as recited in claim 16 or 17, wherein the first service is an audio service and the second service is a video service.

19. The apparatus as recited in one of claims 16 to 18, wherein the event is a call connection service.

20. The apparatus as recited in one of claims 16 to 18, wherein the event is a character SMS confirmation message.
